# EUROPÄISCHE PATENTSCHRIFT

(11) **EP 3 938 681 B1**
(45) Veröffentlichungstag und Bekanntmachung des Hinweises auf die Patenterteilung: **18.06.2025**
(21) Anmeldenummer: 20707362.8
(22) Anmeldetag: 12.02.2020
(51) Int. Cl.: F16H 48/40

(54) **DIFFERENTIALGETRIEBE**
DIFFERENTIAL GEARBOX
DIFFÉRENTIEL

(30) Priorität: 12.03.2019 DE 102019203340
(43) Veröffentlichungstag der Anmeldung: 19.01.2022
(73) Patentinhaber: Robert Bosch GmbH, 70442 Stuttgart (DE)
(72) Erfinder: NGUYEN, Ngoc-Thach, 74189 Weinsberg (DE); SCHULZ, Martin, 70806 Kornwestheim (DE)
(86) Internationale Anmeldenummer: PCT/EP2020/053623
(87) Internationale Veröffentlichungsnummer: WO 2020/182399

(56) Entgegenhaltungen:
- EP-A1- 2 538 119
- EP-A1- 2 578 904
- DE-A1- 102012 207 500
- DE-U1- 202017 103 980
- JP-U- S59 157 149
- US-A1- 2013 035 196

## Beschreibung

### Technisches Gebiet

Die Erfindung bezieht sich auf ein Differential- oder ein Verteilergetriebe für ein Fahrzeug, sowie auf ein Montageverfahren für ein Differential- oder Verteilergetriebe und eine Verwendung des Differential- oder Verteilergetriebes in einem Fahrzeug, welches durch eine Verbrennungskraftmaschine angetrieben wird oder zur Verwendung in einem Fahrzeug, welches mindestens eine elektrische Maschine als Antrieb aufweist.

### Stand der Technik

DE 10 2015 200 667 A1 bezieht sich auf eine Kupplungsanordnung mit elektromagnetischem Aktuator. Die Kupplungsanordnung umfasst ein drehend antreibbares Getriebegehäuse, das zumindest einen Hülsenansatz zur drehbaren Lagerung in einem ortsfesten Gehäuse aufweist. Ferner ist ein Abtriebsteil vorgesehen, das drehbar in dem Getriebegehäuse angeordnet ist, ferner eine Kupplung, die im Leistungspfad zwischen dem Getriebegehäuse und dem Abtriebsteil angeordnet ist. Die Kupplung weist ein erstes Kupplungsteil auf, das relativ zum Getriebegehäuse drehfest und axial beweglich gehalten ist, sowie ein zweites Kupplungsteil, welches mit dem Abtriebsteil fest verbunden ist und im Getriebegehäuse angeordnet ist. Es ist ein steuerbarer Aktuator zum Betätigen der Kupplung vorgesehen, derart, dass das erste Kupplungsteil und das zweite Kupplungsteil zur Übertragung eines Drehmomentes optional miteinander verbindbar sind, wobei der Aktuator einen koaxial zum Hülsenansatz des Getriebegehäuses angeordneten ringförmigen Elektromagneten mit einem Magnetgehäuse und einem axial beweglichen Kolben aufweist.

DE 10 2015 200 465 A1 bezieht sich auf eine Differentialvorrichtung für ein Fahrzeug. Die Differentialvorrichtung umfasst einen ersten Gehäuseabschnitt, wobei der erste Gehäuseabschnitt zur Lagerung von einem Sonnenrad und/oder zur Lagerung der Differentialvorrichtung an einer Umgebungskonstruktion ausgebildet ist. Ferner sind ein zweiter Gehäuseabschnitt, ein Antriebsradabschnitt und ein Befestigungsteil vorgesehen, wobei das Befestigungsteil, der zweite Gehäuseabschnitt und der Antriebsradabschnitt über eine Schraubverbindung miteinander verbunden sind und eine verschraubte Baugruppe bilden. Die verschraubte Baugruppe bildet eine formschlüssige Aufnahme, wobei der erste Gehäuseabschnitt in der formschlüssigen Aufnahme aufgenommen ist.

DE 10 2012 213 405 A1 bezieht sich auf ein Kegelraddifferential für ein Fahrzeug. Das Kegelraddifferential umfasst ein Außenrad mit einem Differentialkorb, wobei der Differentialkorb über mindestens einen Verbindungsbereich mit dem Außenrad fest verbunden ist. Der Differentialkorb weist mindestens einen Stegbereich auf, an dem ein Ausgleichsrad angeordnet ist, wobei die Drehachse des Ausgleichsrades in einer axialen Draufsicht auf das Kegelraddifferential eine Ausgleichsachsrichtung definiert. In der axialen Draufsicht ist ein Ausgleichswinkelbereich von mindestens +/- 20° um die Ausgleichsachsrichtung von dem mindestens einen Verbindungsbereich freigestellt.

EP2578904A1 offenbart ein Verfahren zur Montage eines Differentialgetriebes mit einem Differentialkorb gemäß dem Oberbegriff des Anspruchs 1.

### Darstellung der Erfindung

Erfindungsgemäß wird ein Verfahren zur Montage eines Differentialgetriebes mit einem Differentialkorb gemäß der Ansprüchen offenbart.

Durch die erfindungsgemäß vorgeschlagene Lösung kann in vorteilhafter Weise erreicht werden, dass die Baugruppe Differential- oder Verteilergetriebe wesentlich leichter ist und zudem weniger Bauteile benötigt. Durch die erfindungsgemäß vorgeschlagene Lösung ist eine viel einfachere Montage unter einer wesentlich genaueren robusten Zentrierung und Fixierung der einzelnen Komponenten des Differential- oder Verteilergetriebes in Bezug aufeinander möglich.

Der erfindungsgemäß vorgeschlagenen Lösung weiter folgend, weist der Differentialkorb des Differential- oder Ausgleichsgetriebes eine Anzahl sich in Umfangsrichtung erstreckender Klauen auf. Die Klauen des Differentialkorbs sind in diesen integriert. Dadurch lässt sich eine leichtere und fertigungstechnisch robuster herstellbare Verbindung zwischen dem Großzahnrad oder einem Zahnkranz einerseits und dem Differentialkorb des Differential- oder Verteilergetriebes andererseits realisieren.

Der erfindungsgemäß vorgeschlagenen Lösung folgend können als Großzahnrad ein solches in Massivbauweise eingesetzt werden, oder alternativ kann das Großzahnrad, welches erfindungsgemäß formschlüssig mit dem Differentialkorb verbunden ist auch als Zahnkranz ausgeführt werden.

In vorteilhafter Weise sind das Großzahnrad in Massivbauweise oder der Zahnkranz mit einer Anzahl von Aussparungen versehen, die der Anzahl von integrierten Klauen entspricht, die am Differentialkorb ausgebildet sind. Die Aussparungen am Großzahnrad in Massivbauweise oder am Zahnkranz sind im Material desselben ausgebildet und erstrecken sich im Wesentlichen in Umfangsrichtung des Großzahnrades in Massivbauweise oder des Zahnkranzes vorzugsweise bogenförmig.

Der erfindungsgemäß vorgeschlagenen Lösung weiter folgend sind die Aussparungen in der Anzahl der integrierten Klauen entsprechend der Anzahl am Großzahnrad in Massivbauweise oder am Zahnkranz ausgeführt, durch einen inneren Aussparungsbogen, einen äußeren Aussparungsbogen und Aussparungsradien begrenzt. Diese lassen sich fertigungstechnisch äußerst einfach herstellen, was zur Absenkung der Fertigungskosten beiträgt.

Der erfindungsgemäß vorgeschlagenen Lösung weiter folgend umfassen die in den Differentialkorb des Differential- oder Verteilergetriebes integrierten Klauen mindestens eine radiale Zentriernase und mindestens eine sich in tangentialer Richtung erstreckende Zentrierrundung auf. Durch das Vorsehen der mindestens einen radialen Zentriernase und der mindestens einen sich in tangentialer Richtung erstreckenden Zentrierrundung lässt sich in vorteilhafter Weise das Großzahnrad in Massivbauweise oder der Zahnkranz am Differentialkorb zentrieren.

Im montierten Zustand des Großzahnrades in Massivbauweise bzw. des Zahnkranzes und des Differentialkorbes wird eine Formschlussverbindung zwischen diesen beiden Komponenten durch Verstemmen erreicht, insbesondere durch Erzeugung einer Schälverstemmung.

### Vorteile der Erfindung

Das erfindungsgemäß vorgeschlagene Differential- oder Verteilergetriebe ermöglicht eine kompakte, einfache, gewichtssparende Bauweise, eine größere Führungslänge sowie eine bessere Zentrierung und schließlich eine einfachere Montage im Vergleich zu bisherigen Lösungen.

Durch die erfindungsgemäß vorgeschlagene Auslegung wird einerseits die Anzahl der Bauteile herabgesetzt, was zu besagter Gewichtsersparnis führt. Des Weiteren erlaubt das erfindungsgemäß vorgeschlagene Differential- oder Verteilergetriebe eine gute Führungslänge, ermöglicht eine bessere Zentrierung und eine wesentlich einfachere Montage, da weniger Montageschritte erforderlich sind. In Bezug auf das Großzahnrad in Massivbauweise sowie den Zahnkranz und dessen Verbindung am Differentialkorb lässt sich eine wesentlich robustere Zentrierung und fertigungstechnisch einfacher zu realisierende Fixierung zwischen den genannten Bauteilen erreichen.

Durch die erfindungsgemäß vorgeschlagene Lösung lässt sich des Weiteren ein besserer Übertragungsgrad erreichen, ferner eine geringere Gewichtsbelastung, da Verbindungselemente wie Schrauben und fertigungstechnisch genau herzustellende Bohrungen entfallen können. Des Weiteren können bei der erfindungsgemäß vorgeschlagenen Lösung die Gewindebohrungsbearbeitung und der Montagevorgang des Anschraubens entfallen. Die erfindungsgemäß vorgeschlagene Schälverstemmung kann im weitesten Sinne auch hoch automatisiert durgeführt werden, was die Herstellkosten des erfindungsgemäß vorgeschlagenen Differential- oder Verteilergetriebes erheblich herabsetzt.

Sich einstellende Toleranzen aufgrund des Fügens des Großzahnrades in Massivbauweise oder des Zahnkranzes mit dem Differentialkorb resultieren aus der Fertigung der besagten Bauteile mit Spiel- bzw. Übergangspassungen. Die beiden Bauteile werden über eine relativ kurze radiale Führungslänge zusammengefügt und durch Schraubverbindungen zusammengehalten, was im vorliegenden Zusammenhang durch die erfindungsgemäß vorgeschlagene Lösung vermieden werden kann. Des Weiteren bestehen bei den bisher durch Schraubverbindungen hergestellten Verbindungen zwischen den besagten Komponenten relativ hohe Anforderungen an die Koaxialität, die durch die erfindungsgemäß vorgeschlagene Lösung wesentlich einfacher eingehalten werden können, verglichen mit der Verwendung von Schrauben zur Verbindung.

Die Aussparungen in dem Zahnkranz bzw. im Großzahnrad in Massivbauweise werden an den jeweils entstehenden vier Ecken zur Herabsetzung des Einflusses der Kerbwirkung mit kleineren Radien ausgeführt.

### Kurze Beschreibung der Zeichnungen

Anhand der Zeichnungen wird die Erfindung nachstehend eingehender beschrieben.

Es zeigt:
- Figur 1: eine perspektivische Ansicht eines Differential- und Verteilergetriebes,
- Figur 2: eine perspektivische Rückansicht des Differentialkorbs,
- Figur 3: eine perspektivische Draufsicht auf den Differentialkorb mit integrierten Klauen,
- Figur 4: eine perspektivische Ansicht eines Zahnkranzes mit bogenförmig verlaufenden Aussparungen,
- Figur 5: eine montierte Baugruppe aus Zahnkranz und Differentialkorb,
- Figur 6: einen Schnitt durch einen Differentialkorb, an dem ein Großzahnrad in Massivbauweise oder ein Zahnkranz aufgenommen ist,
- Figur 7: eine Draufsicht auf die Anordnung gemäß Figur 6,
- Figur 8: die Darstellung eines unverformten Zustandes,
- Figur 9: ein Verstemmungswerkzeug, mit welchem eine Schälverstemmungsformschlussverbindung hergestellt wird,
- Figur 10: eine perspektivische Ansicht eines Differentialkorbes mit 5 in Umfangsrichtung verteilt angeordneten integrierten Klauen und
- Figur 11: eine Detailansicht einer in einer Aussparung aufgenommenen integrierten Klaue eines Differentialkorbes.

### Ausführungsvarianten

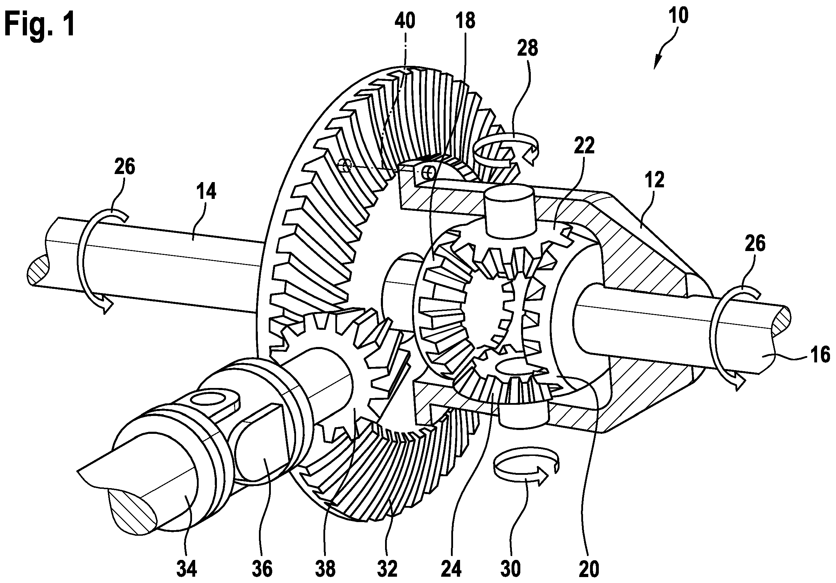

Der Darstellung gemäß Figur 1 ist eine perspektivische Ansicht eines Differential- oder Verteilergetriebes zu entnehmen.

Figur 1 zeigt ein Differentialgetriebe 10, welches einen Differentialkorb 12 umfasst. Im Differentialkorb 12 ist ein erstes Achswellenrad 18 aufgenommen, welches eine erste Achswelle 14 antreibt. Des Weiteren befindet sich im Differentialkorb 12 ein zweites Achswellenrad 20, über welches eine zweite Achswelle 16 angetrieben wird. Zwischen dem ersten Achswellenrad 18 und dem zweiten Achswellenrad 20 befinden sich am Differentialkorb 12 ein erstes Ausgleichsrad 22 sowie ein zweites Ausgleichsrad 24, über welche bei Kurvenfahrten die unterschiedlichen Fahrwege ausgeglichen werden können.

Während eine Drehrichtung 26 der beiden Achswellen 14 und 16 gleichgerichtet ist, rotieren innerhalb des Differentialkorbs 12 das erste Ausgleichsrad 22 in eine Drehrichtung 28 des ersten Ausgleichsrades, während sich das zweite Ausgleichsrad 24 innerhalb des Differentialkorbs 12 in einer dazu entgegengesetzten Drehrichtung 30 des zweiten Ausgleichsrades 24 bewegt.

Des Weiteren ist der Darstellung gemäß Figur 1 zu entnehmen, dass ein Großzahnrad 32, welches drehfest mit dem Differentialkorb 12 verbunden ist, über eine Antriebswelle 34 angetrieben ist, welche ein Kardangelenk 36 umfassen kann. Ein an der Antriebswelle 34 aufgenommenes Antriebsritzel 38 kämmt mit dem Großzahnrad 32. Wie aus der perspektivischen Darstellung gemäß Figur 1 schematisch hervorgeht, sind das Großzahnrad 32 und der Differentialkorb 12 über eine Anzahl von Verbindungselementen 40, hier ausgebildet als Verbindungsschrauben, drehfest miteinander verbunden.

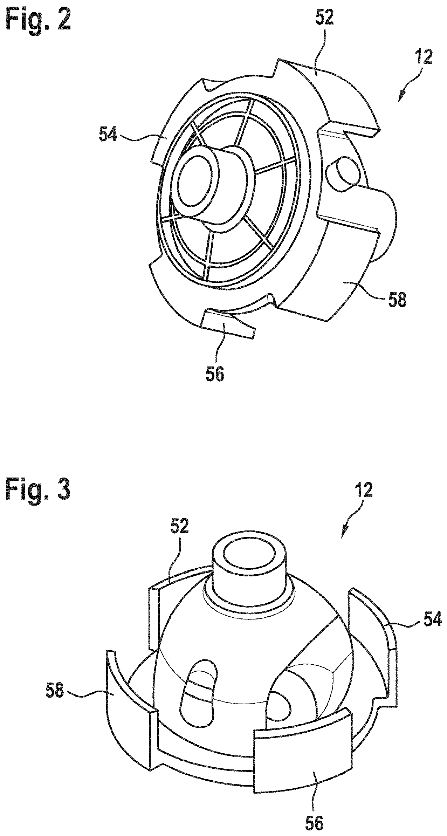

Beim erfindungsgemäß vorgeschlagenen Differential- und Verteilergetriebe 10 kommt ein Differentialkorb 12 gemäß der Darstellung in Figur 2 zum Einsatz. Aus der perspektivischen Rückansicht gemäß Figur 2 geht hervor, dass am Differentialkorb 12 in Umfangsrichtung sich erstreckende integrierte Klauen 52, 54, 56 und 58 ausgeführt sind. Die integrierten Klauen 52, 54, 56 und 58 haben einen im Wesentlichen bogenförmigen Verlauf und stehen über den Umfang des Differentialkorbes 12 senkrecht nach oben.

Figur 3 zeigt eine perspektivische Draufsicht auf den Differentialkorb 12 gemäß Figur 2.

Figur 3 zeigt, dass die erste integrierte Klaue 52 in 12-Uhr-Position angeordnet ist, wohingegen die zweite integrierte Klaue 54 sich in der 3-Uhr-Position befindet. Entsprechend liegt die dritte integrierte Klaue 56 in 6-Uhr-Position, wohingegen die vierte integrierte Klaue 58 sich in 9-Uhr-Position am Differentialkorb 12 befindet.

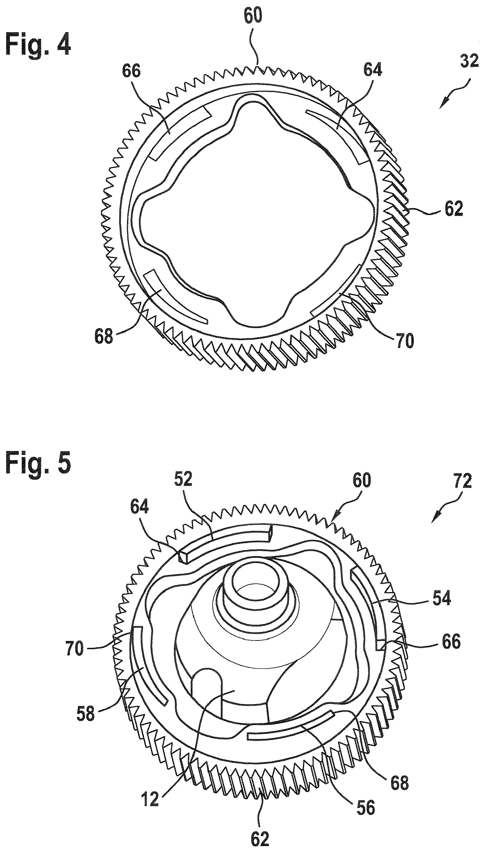

Aus der Darstellung gemäß Figur 4 geht eine Draufsicht auf einen Zahnkranz 60 näher hervor.

Wie der Draufsicht gemäß Figur 4 entnommen werden kann, ist ein Zahnkranz 60 in Umfangsrichtung mit einer Anzahl von Aussparungen 64, 66, 68 bzw. 70 versehen. Der Zahnkranz 60 umfasst an seinem Außenumfang eine Verzahnung 62, die beispielsweise als Schrägverzahnung ausgebildet sein kann, so dass die Laufruhe des Zahnkranzes 60 aufgrund der größeren Überdeckung verbessert wird. Figur 4 zeigt eine erste Aussparung 64, eine zweite Aussparung 66, eine dritte Aussparung 68 sowie eine vierte Aussparung 70. Die Aussparungen sind ebenfalls bogenförmig komplementär zur Bogenform der integrierten Klauen 52, 54, 56, 58, die am Differentialkorb 12 ausgeführt sind, geformt. Die Anzahl der Aussparungen 64, 66, 68, 70 im Zahnkranz 60 gemäß der Darstellung in Figur 4 entspricht der Anzahl der integrierten Klauen 52, 54, 56 und 58, die in Umfangsrichtung im Material des Zahnkranzes 60 ausgeführt sind.

Figur 5 zeigt in perspektivischer Draufsicht einen montierten Zustand der Bauteile Zahnkranz 60 und Differentialkorb 12:

Im montierten Zustand 72 sind die einzelnen integrierten Klauen 52, 54, 56, 58 des Differentialkorbs 12 in die Aussparungen 64, 66, 68 und 70 des Zahnkranzes 60 eingeschoben. Die bogenförmigen Endbereiche der einzelnen integrierten Klauen 52, 54, 56, 58 stehen über die Oberseiten der Aussparungen 64, 66, 68, 70 leicht hervor. Im montierten Zustand 72 gemäß der perspektivischen Ansicht in Figur 5 sind die Komponenten Zahnkranz 60 und Differentialkorb 12 mit integrierten Klauen 52, 54, 56, 58 noch nicht miteinander gefügt.

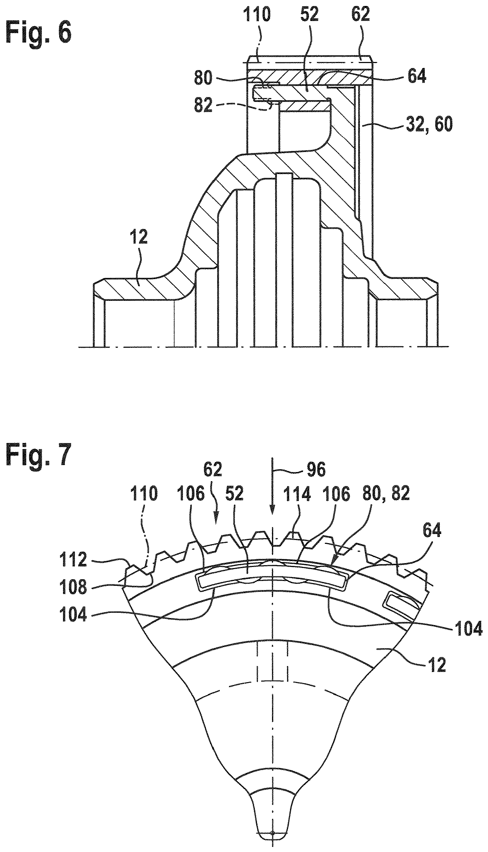

Den Darstellungen gemäß den Figuren 6, 7, 8 und 9 sind Fügeschritte zur Erstellung einer formschlüssigen Verbindung zwischen dem Zahnkranz und dem Differentialkorb 12 des Differential- oder Verteilergetriebes 10 zu entnehmen.

Figur 6 zeigt einen Längsschnitt durch den Differentialkorb 12, an dem ein Großzahnrad 32 in Massivbauweise oder ein Zahnkranz 60 aufgenommen werden kann. Im in Figur 6 dargestellten Zustand ist beispielsweise die erste integrierte Klaue 52 in eine komplementäre sich im Wesentlichen in Umfangsrichtung erstreckende erste Aussparung 64 des Großzahnrades 32 in Massivbauweise bzw. des Zahnkranzes 60 eingeschoben. Wie in Figur 5 bereits dargestellt, steht die Oberseite der ersten integrierten Klaue 52 über die Oberseite der ersten Aussparung 64 hervor. Wird eine Formschlussverbindung zwischen dem Großzahnrad 32 in Massivbauweise oder dem Zahnkranz 60 und der ersten integrierten Klaue 52 des Differentialkorbs 12 hergestellt, erfolgt eine plastische Verformung des Materials der ersten Klaue 52.

Zur Ausführung der formschlüssigen Verbindung liegt eine ursprüngliche Fügegeometrie 80 vor, bei einem Verstemmen bzw. Schälverstemmen der ersten integrierten Klaue 52 nimmt diese eine verstemmte Fügegeometrie 82 an.

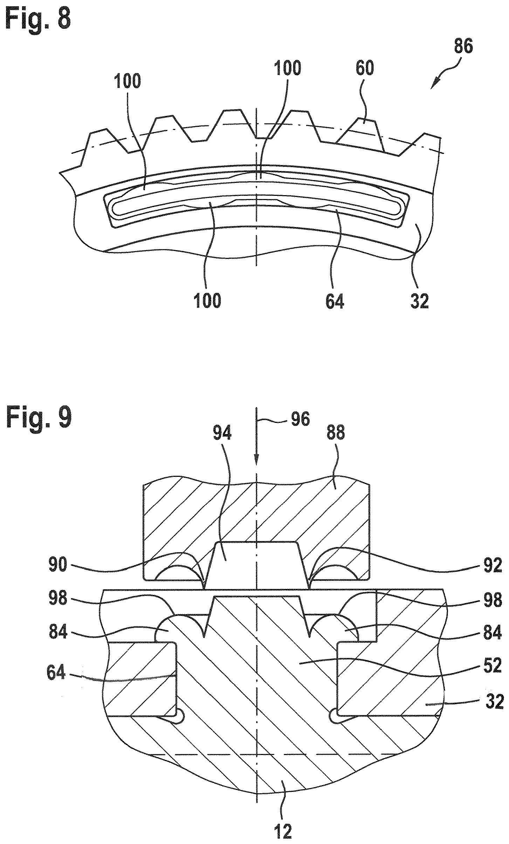

In der verstemmten Fügegeometrie 82 füllt das plastisch verformte Klauenmaterial 84, wie in Figur 9 dargestellt, die sich im Wesentlichen in die Zeichenebene gemäß Figur 4 erstreckende bogenförmige erste Aussparung 64 aus.

Der Vollständigkeit halber sei erwähnt, dass sich am Außenumfang des Großzahnrades 32 in Massivbauweise bzw. am Zahnkranz 60 die Verzahnung 62 befindet, vorzugsweise ausgebildet als Schrägverzahnung. Ein Verzahnungsteilkreisdurchmesser ist mit Bezugszeichen 110 gekennzeichnet.

Figur 7 zeigt die Draufsicht der Anordnung gemäß Figur 6, d. h. eine Drehung der Figur 6 um 90° in die Zeichenebene. In Figur 7 ist dargestellt, dass sich am Außenumfang des Großzahnrades 32 in Massivbauweise des Zahnkranzes 60 die Verzahnung 62 befindet. Diese umfasst eine Anzahl von Zähnen 114, die sich zwischen einem Verzahnungsfußkreis 108 und einem Verzahnungskopfkreis 112 erstrecken, wobei jeweils ein Zahn 114 durch zwei Zahnflanken 116 begrenzt ist.

In der Draufsicht gemäß Figur 7 ist dargestellt, wie das Material der ersten integrierten Klaue 52 die erste bogenförmige Aussparung 64 im Material des Großzahnrades 32 in Massivbauweise oder des Zahnkranzes 60 durchsetzt. Die erste Aussparung 64 ist in der Darstellung gemäß Figur 7 durch den inneren Aussparungsbogen 104 und den äußeren Aussparungsbogen 106 begrenzt.

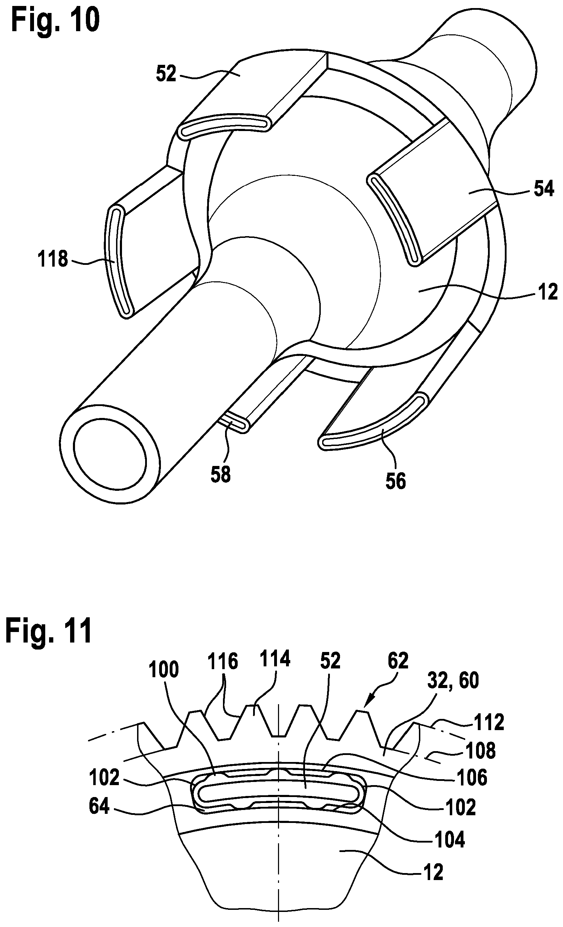

Der Darstellung gemäß Figur 8 ist zu entnehmen, dass vor der Herstellung der formschlüssigen Verbindung zwischen der ersten integrierten Klaue 52 des Differentialkorbs 12 und dem Großzahnrad 32 in Massivbauweise bzw. dem Zahnkranz 16 das Material der ersten integrierten Klaue 52 eine Anzahl von radialen Zentriernasen 100 aufweist. Des Weiteren sind an der ersten integrierten Klaue 52 jeweils an ihren ihnen bogenförmig gegenüberliegenden Enden Tangentialzentrierrundungen 102 ausgeführt (vgl. auch Darstellung gemäß Figur 11). Im in Figur 8 dargestellten Ausgangszustand, d. h. vor der Herstellung der formschlüssigen Verbindung, wird das Großzahnrad 32 in Massivbauweise oder der Zahnkranz 60 in Bezug auf die jeweiligen integrierten Klauen 52, 54, 56, 58, die im Material des Differentialkorbs 12 ausgebildet sind, sowohl radial als auch tangential fixiert.

In Figur 9 ist dargestellt, wie ein Verstemmungswerkzeug 88 in sich im Wesentlichen in radialer Richtung erstreckender Kraftrichtung 96 an die miteinander gefügte Anordnung aus Großzahnrad 32 in Massivbauweise oder Zahnkranz 60 und Differentialkorb 12 angestellt wird. An der dem Großzahnrad 32 in Massivbauweise bzw. dem Zahnkranz 60 zuweisenden Seite des Verstemmungswerkzeugs 88 sind eine erste Spitze 90 und eine zweite Spitze 92 ausgeführt. Zwischen der ersten Spitze 90 und der zweiten Spitze 92 erstreckt sich in Umfangsrichtung des Verstemmungswerkzeugs 88 gesehen, ein Freiraum 94. Durch Einwirkung des Verstemmungswerkzeugs 88 auf die in Figur 9 dargestellte erste integrierte Klaue 52, wird diese verformt und plastisch verformtes Klauenmaterial 84 füllt nunmehr die erste Aussparung 64 aus, so dass eine Formschlussverbindung zwischen dem Großzahnrad 32 in Massivbauweise oder dem Zahnkranz 60 einerseits und der ersten integrierten Klaue 52 des Differentialkorbs 12 andererseits hergestellt werden kann. Figur 9 zeigt, dass das plastisch verformte Klauenmaterial 84 bis in den Aussparungsradius 98 reicht, so dass die sich im Wesentlichen in Umfangsrichtung in Bogenform erstreckende erste Aussparung 64 vollständig vom plastisch verformten Klauenmaterial der ersten integrierten Klaue 52 des Differentialkorbs 12 ausgefüllt ist. Analoges gilt für die Paarung aus zweiter integrierter Klaue 54 und zweiter Aussparung 66, bzw. der dritten integrierten Klaue 56 und der dritten Aussparung 68 sowie für die Paarung aus vierter integrierter Klaue 58 und vierter Aussparung 70.

Figur 10 zeigt eine perspektivische Ansicht eines Differentialkorbs 12, in dessen Umfang sich die erste integrierte Klaue 52, die zweite integrierte Klaue 54, die dritte integrierte Klaue 56 sowie die vierte integrierte Klaue 58 befinden. Des Weiteren weist der Differentialkorb 12 gemäß der perspektivischen Ansicht in Figur 10 eine fünfte integrierte Klaue 118 auf.

Der Darstellung gemäß Figur 11 ist die erste integrierte Klaue 52 in noch unverformtem Zustand in die erste Aussparung 64 eingeschoben. In diesem Zustand werden der Differentialkorb 12 einerseits und das Großzahnrad 32 in Massivbauweise bzw. der Zahnkranz 60 andererseits in Bezug aufeinander in radialer und tangentialer Richtung zueinander zentriert. Figur 11 zeigt, dass die an der - in radialer Richtung gesehen - Oberseite der ersten integrierten Klaue 52 liegenden radialen Zentriernasen 100 am äußeren Aussparungsbogen 106 der ersten Aussparung 64 anliegen, während die beiden beabstandet voneinander an der Unterseite der ersten integrierten Klaue 52 ausgebildeten radialen Zentriernasen 100 am inneren Aussparungsbogen 104 der ersten Aussparung 64 anliegen. Figur 11 zeigt des Weiteren, dass die an den einander gegenüberliegenden Enden der ersten Aussparung 64 vorgesehenen tangentialen Zentrierungen ebenfalls an den Begrenzungsflächen der ersten Aussparung 64 anliegen. In Figur 11 hat noch keine plastische Verformung des Klauenmaterials der ersten integrierten Klaue 52 stattgefunden.

Figur 11 zeigt des Weiteren die am Umfang des Großzahnrades 32 in Massivbauweise bzw. am Zahnkranz 60 ausgebildete Verzahnung 62, die durch eine Anzahl von Zähnen 114 gebildet ist, die jeweils durch Zahnflanken 116 begrenzt werden. Bezugszeichen 108 bezeichnet den Verzahnungsfußkreis, während durch 112 der Verkzahnungskopfkreis der Verzahnung 62 gebildet ist. Die Erfindung umfasst des Weiteren ein Verfahren zur Montage eines Differential- oder Verteilergetriebes 10, wobei bei der Montage des Differential- oder Verteilergetriebes 10 zumindest die nachfolgenden Verfahrensschritte durchlaufen werden: Zunächst wird das Großzahnrad 32, ausgeführt in Massivbauweise, oder der Zahnkranz 60 mit Aussparungen 64, 66, 68, 70 mit den in den Differentialkopf 12 integrierten Klauen 52, 54, 56, 58, 118 gefügt. Danach erfolgt die Positionierung eines Verstemmungswerkzeuges 88 jeweils oberhalb einer in eine Aussparung 64, 66, 68, 70, eingeführten integrierten Klaue 52, 54, 56, 58, 118 und das Aufbringen einer Verstemmungskraft in radialer Richtung 96 wirkend. Daran schließt sich ein plastisches Verformen 84 des Materials der jeweiligen integrierten Klaue 52, 54, 56, 58, 118 innerhalb der jeweiligen Aussparung 64, 66, 68, 70 an. Es erfolgt die Herstellung einer formschlüssigen drehfesten Verbindung zwischen dem Großzahnrad 32 in Massivbauweise oder dem Zahnkranz 60 einerseits und dem Differentialkorb 12 andererseits insbesondere durch die Ausführung einer Schälverstemmung.

Durch die vorstehend anhand der Figuren 1 bis 11 dargestellte Auslegung des erfindungsgemäß vorgeschlagenen Differential- und Verteilergetriebes 10 kann die Bauteileanzahl reduziert werden, wodurch die Baugruppe des Differential- und Verteilergetriebes 10 leichter wird. Aufgrund der sich in Umfangsrichtung erstreckenden integrierten Klauen 52, 54, 56, 58 bzw. 118 ist die Führungslänge erheblich verbessert, ferner kann durch das Vorsehen einer Anzahl von radialen Zentriernasen 100 auf den Klauen 52, 54, 56, 58 eine wesentlich bessere Zentrierung vor Ausführung der Schälverstemmung erreicht werden. Deren Ausbildung ist relativ einfach, da während der Schälverstemmung die Zentrierung in tangentialer und axialer Richtung aufrechterhalten bleibt. Durch die erfindungsgemäß vorgeschlagene Auslegung des Differential- und Verteilergetriebes 10 kann ein besserer Übertragungswirkungsgrad und eine geringere Gewichtsbelastung erreicht werden, da weniger Bauteile erforderlich sind. In vorteilhafter Weise sind die integrierten Klauen 52, 54, 56, 58 in einer Umfangslänge ausgebildet, die vorzugsweise der Breite der Verzahnung 62 des Zahnkranzes 60 bzw. des Großzahnrades 32 in Massivbauweise entspricht. Dadurch ist ein gutes axiales und radiales Führungsverhalten des Großzahnrades 32 in Massivbauweise bzw. des Zahnkranzes 60 gegeben. Die sich am Ende der integrierten Klauen 52, 54, 56, 58 befindenden tangentialen Zentrierrundungen 102 verbessern die tangentiale Zentriergenauigkeit.

Die vorstehende Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Montage eines Differentialgetriebes (10) mit einem Differentialkorb (12), in welchem Achswellenräder (18, 20) und Ausgleichsräder (22, 24) aufgenommen sind, jeweils ein Achswellenrad (18, 20) eine erste Achswelle (14) oder eine zweite Achswelle (16) antreibt und ein über eine Antriebswelle (34) angetriebenes Großzahnrad (32, 60) mit dem Differentialkorb (12) drehfest verbunden ist, wobei das Großzahnrad (32, 60) formschlüssig mit dem Differentialkorb (12) des Differentialgetriebes (10) verbunden wird, wobei das Verfahren zumindest die folgenden Verfahrensschritte aufweist:
a. Bereitstellen eines Differentialkorbs (12) mit einer Anzahl sich in Umfangsrichtung erstreckender integrierter Klauen (52, 54, 56, 58, 118),
b. Bereitstellen eines Großzahnrades (32) mit einer Anzahl von Aussparungen (64, 66, 68, 70), welche der Anzahl der in dem Differentialkorb (12) integrierten Klauen (52, 54, 56, 58,118) entspricht, wobei das Großzahnrad (32) in Massivbauweise oder als Zahnkranz (60) ausgeführt ist,
c. Fügen des Großzahnrades (32) mit dem Differentialkorb (12), wobei die einzelnen integrierten Klauen (52, 54, 56, 58) des Differentialkorbs (12) in die Aussparungen (64, 66, 68 und 70) des Großzahnrades (32) eingeschoben werden,
d. Herstellen einer formschlüssigen, drehfesten Verbindung zwischen dem Großzahnrad (32) einerseits und dem Differentialkorb (12) andererseits,
**dadurch gekennzeichnet, dass** das Herstellen einer formschlüssigen, drehfesten Verbindung zwischen dem Großzahnrad (32) einerseits und dem Differentialkorb (12) andererseits als Verstemmung ausgeführt wird und die folgenden Schritte umfasst:
e. Positionieren eines Verstemmungswerkzeuges (88) jeweils oberhalb einer in einer Aussparung (64, 66, 68, 70) eingeführten integrierten Klaue (52, 54, 56, 58, 118) und Aufbringen einer Verstemmungskraft in radialer Richtung (96) und
f. Plastisches Verformen (84) des Materials der jeweiligen integrierten Klaue (52, 54, 56, 58, 118) innerhalb der jeweiligen Aussparung (64, 66, 68, 70) mittels des Verstemmungswerkzeuges (88), so dass die jeweilige Aussparung (64, 66, 68, 70) vollständig vom plastisch verformten Klauenmaterial (84) der verformten Klaue des Differentialkorbs (12) ausgefüllt wird.

2. Verfahren nach Anspruch 1, **dadurch gekennzeichnet, dass** die Aussparungen (64, 66, 68, 70) bogenförmig ausgebildet sind und jeweils durch einen inneren Aussparungsbogen (104), einen äußeren Aussparungsbogen (106) und Aussparungsradien (98) begrenzt sind und dass die in den Differentialkorb (12) integrierten Klauen (52, 54, 56, 58, 118) radiale Zentriernasen (100) und tangentiale Zentrierrundungen (102) aufweisen und dass bei dem Schritt des Fügens durch Anlage der Zentriernasen (100) an dem äußeren Aussparungsbogen (106) und dem inneren Aussparungsbogen (104) und durch die Anlage der tangentialen Zentrierrundungen (102) an den Begrenzungsflächen der jeweiligen Aussparungen (64, 66, 68, 70) eine Zentrierung des Großzahnrades (32) an dem Differentialkorb (12) erreicht wird.

## Claims

1. Method for mounting a differential gearbox (10) having a differential cage (12) in which side gears (18, 20) and spider gears (22, 24) are accommodated, a side gear (18, 20) respectively drives a first axle shaft (14) or a second axle shaft (16), and a large gearwheel (32, 60) driven via a drive shaft (34) is connected to the differential cage (12) in a rotationally fixed manner, wherein the large gearwheel (32, 60) is connected to the differential cage (12) of the differential gearbox (10) in a form-fitting manner, wherein the method comprises at least the following method steps:
a. providing a differential cage (12) having a number of integrated claws (52, 54, 56, 58, 118) extending in the circumferential direction,
b. providing a large gearwheel (32) having a number of cutouts (64, 66, 68, 70) which corresponds to the number of claws (52, 54, 56, 58, 118) integrated in the differential cage (12), wherein the large gearwheel (32) is configured with a solid construction or as a ring gear (60),
c. joining the large gearwheel (32) to the differential cage (12), wherein the individual integrated claws (52, 54, 56, 58) of the differential cage (12) are inserted into the cutouts (64, 66, 68 and 70) of the large gearwheel (32),
d. producing a form-fitting, rotationally fixed connection between the large gearwheel (32) on the one hand and the differential cage (12) on the other,
**characterized in that** the production of a form-fitting, rotationally fixed connection between the large gearwheel (32) on the one hand and the differential cage (12) on the other hand is performed by caulking and comprises the following steps:
e. positioning a caulking tool (88) in each case above an integrated claw (52, 54, 56, 58, 118) inserted in a cutout (64, 66, 68, 70) and applying a caulking force in the radial direction (96) and
f. plastically deforming (84) the material of the respective integrated claw (52, 54, 56, 58, 118) within the respective cutout (64, 66, 68, 70) by means of the caulking tool (88), so that the respective cutout (64, 66, 68, 70) is completely filled by the plastically deformed claw material (84) of the deformed claw of the differential cage (12).

2. Method according to Claim 1, **characterized in that** the cutouts (64, 66, 68, 70) are arcuate in form and are each delimited by an inner cutout arc (104), an outer cutout arc (106) and cutout radii (98), and **in that** the claws (52, 54, 56, 58, 118) integrated into the differential cage (12) have radial centring lugs (100) and tangential centring rounded portions (102), and **in that**, in the step of joining by applying the centring lugs (100) to the outer cutout arc (106) and the inner cutout arc (104) and by applying the tangential centring rounded portions (102) to the boundary surfaces of the respective cutouts (64, 66, 68, 70), centring of the large gearwheel (32) on the differential cage (12) is achieved.

## Revendications

1. Procédé de montage d'un différentiel (10), comprenant une cage de différentiel (12) qui reçoit des roues d'arbre d'essieu (18, 20) et des roues d'équilibrage (22, 24), respectivement une roue d'arbre d'essieu (18, 20) entraînant un premier arbre d'essieu (14) ou un deuxième arbre d'essieu (16), et une grande roue dentée (32, 60) entraînée par une roue d'arbre d'essieu (34) étant reliée de manière solidaire en rotation à la cage de différentiel (12), dans lequel la grande roue dentée (32, 60) est reliée par complémentarité de forme à une cage de différentiel (12) du différentiel (10), le procédé comprenant au moins les étapes de procédé suivantes consistant à :
a) fournir une cage de différentiel (12) pourvue d'un nombre de griffes (52, 54, 56, 58, 118) intégrées s'étendant dans la direction circonférentielle,
b) fournir une grande roue dentée (32) pourvue d'un nombre d'évidements (64, 66, 68, 70) qui correspond au nombre des griffes (52, 54, 56, 58,118) intégrées dans la cage de différentiel (12), la grande roue dentée (32) étant réalisée en construction massive ou sous forme de couronne dentée (60),
c) assembler la grande roue dentée (32) avec la cage de différentiel (12), dans lequel les griffes intégrées (52, 54, 56, 58) de la cage de différentiel (12) sont insérées dans les évidements (64, 66, 68 et 70) de la grande roue dentée (32),
d) établir une liaison par complémentarité de forme, solidaire en rotation, entre la grande roue dentée (32) et la cage de différentiel (12),
**caractérisé en ce que** l'établissement d'une liaison par complémentarité de forme, solidaire en rotation, entre la grande roue dentée (32) d'une part et la cage de différentiel (12) d'autre part, est réalisé sous forme de matage et comprend les étapes suivantes consistant à :
e) positionner un outil de matage (88) respectivement au-dessus d'une griffe intégrée (52, 54, 56, 58,118) insérée dans un évidement (64, 66, 68, 70) et exercer une forme de matage dans la direction radiale (96), et
f) déformer plastiquement (84) le matériau de la griffe intégrée (52, 54, 56, 58,118) respective à l'intérieur de l'évidement (64, 66, 68, 70) respectif au moyen de l'outil de matage (88) de sorte que l'évidement (64, 66, 68, 70) respectif est rempli entièrement par le matériau de griffe (84) déformé plastiquement de la griffe déformée de la cage de différentiel (12).

2. Procédé selon la revendication 1, **caractérisé en ce que** les évidements (64, 66, 68, 70) sont réalisés en forme d'arc, et sont délimités respectivement par un arc d'évidement intérieur (104), un arc d'évidement extérieur (106) et des rayons d'évidement (98), et **en ce que** les griffes (52, 54, 56, 58, 118) intégrées dans la cage de différentiel (12) présentent des nez de centrage radiaux (100) et des arrondis de centrage (102), et **en ce qu'**à l'étape de l'assemblage, l'application des nez de centrage (100) contre l'arc d'évidement extérieur (106) et l'arc d'évidement intérieur (104) et l'application des arrondis de centrage tangentiels (102) contre les surfaces de délimitation des évidements (64, 66, 68, 70) respectifs permettent d'obtenir un centrage de la grande roue dentée (32) sur la cage de différentiel (12).
